**Europäisches Patentamt**

**European Patent Office**

**Office européen des brevets**

(19)

(11) Numéro de publication: **0 217 455 B1**

# (12) FASCICULE DE BREVET EUROPEEN

(45) Date de publication du fascicule du brevet:
**22.08.90**

(21) Numéro de dépôt: **86201609.4**

(22) Date de dépôt: **17.09.86**

(51) Int. Cl.⁵: **G02F 1/03**

(54) **Relais optique dont la cible fonctionne en mode ferroélectrique.**

(30) Priorité: **20.09.85 FR 8513989**

(43) Date de publication de la demande:
**08.04.87 Bulletin 87/15**

(45) Mention de la délivrance du brevet:
**22.08.90 Bulletin 90/34**

(84) Etats contractants désignés:
**CH DE FR GB LI**

(56) Documents cités:
**FR-A- 1 479 284**

**SOVIET JOURNAL OF QUANTUM ELECTRON, vol. 11, no. 10, Octobre 1981, pages 1348-1350, American Institute of Physics, New York, US; A.I. NAGAEV et al.: "Electron-beam space-time modulator of light with equilibrium-type recording"**

(73) Titulaire: **LABORATOIRES D'ELECTRONIQUE PHILIPS, 3, Avenue Descartes, F-94450 Limeil-Brévannes(FR)**

(84) Etats contractants désignés: **FR**

(73) Titulaire: **N.V. Philips' Gloeilampenfabrieken, Groenewoudseweg 1, NL-5621 BA Eindhoven(NL)**

(84) Etats contractants désignés: **CH DE GB LI**

(72) Inventeur: **Polaert, Rémy, Société Civile S.P.I.D. 209, rue de l'Université, F-75007 Paris(FR)**

(74) Mandataire: **Landousy, Christian et al, Société Civile S.P.I.D. 156, Boulevard Haussmann, F-75008 Paris(FR)**

ACTORUM AG

## Description

L'invention concerne un relais optique comportant une cible d'un matériau électriquement isolant et laissant passer la lumière d'une manière dépendant du champ électrique parallèle à la direction de propagation de cette lumière, des moyens pour faire balayer une première face de cette cible par un faisceau électronique, une anode apte à recueillir des électrons secondaires émis sous l'action de ce faisceau, une lame optiquement transparente et électriquement conductrice disposée contre la deuxième face de la cible, cette lame recevant le signal électrique d'information visuelle et formant ainsi l'électrode de commande, la cible étant constituée en un matériau devenant ferro-électrique au-dessous d'une certaine température, dite température de Curie, au voisinage de laquelle fonctionne le relais optique.

Un relais optique de ce type, pour projecteur de télévision, a été décrit dans les brevets FR-A 1 473 212 et FR-A 1 479 284. Afin de mieux caractériser l'invention un rappel du principe de fonctionnement de ce relais optique est donné ci-après. De plus amples renseignements peuvent être obtenus dans les documents cités.

Le cadre de l'invention concerne la transformation d'un signal électrique à variation temporelle, représentant une information visuelle, en une image visible. On sait que c'est là l'un des rôles d'un poste récepteur de télévision.

Dans le tube "image" d'un tel récepteur, c'est le faisceau d'électrons qui remplit classiquement les trois fonctions fondamentales de cette transformation :

f1 - il fournit l'énergie qui doit apparaître sous forme lumineuse : la puissance lumineuse du tube est donc toujours inférieure à la puissance transportée par le faisceau;

f2 - il réalise le balayage spatial de la surface de l'image;

f3 - il applique l'information visuelle.

En raison des fonctions f2 et f3 entre autres, la puissance du faisceau, et donc la brillance de l'image ne peuvent être augmentées autant qu'il le faudrait pour la projection sur un grand écran, par exemple.

C'est pourquoi il a été proposé de dissocier la fonction f1 confiée, par exemple, à une lampe à arc, des fonctions f2 et f3 confiées à ce que l'on appelle un "relais optique". Il utilise un cristal présentant un effet électro-optique appelé "Effet Pockels". Un cristal de phosphate diacide de potassium $KH_2PO_4$ appelé par la suite KDP, convient à cet usage.

Cet effet peut être partiellement et sommairement décrit comme suit : lorsque le cristal qui est un isolant électrique, est soumis à un champ électrique parallèle à son axe cristallographique c (les trois axes cristallographiques a, b et c formant un trièdre trirectangle, l'axe c étant, le cas échéant, l'axe optique), l'indice n de ce cristal pour des rayons lumineux se propageant dans la direction c et polarisés linéairement dans le plan ab, dépend de la direction de cette polarisation. Plus précisément, si l'on désigne par X et Y les bissectrices des axes a et b, et si l'on repère les paramètres du cristal relatifs à ces diverses directions par les lettres qui désignent ces dernières, on peut décrire que le diagramme des indices dans le plan ab devient une ellipse d'axes X et Y au lieu d'un cercle, et que la différence $n_x - n_y$ est proportionnelle au champ électrique appliqué. Il s'ensuit que si les rayons lumineux incidents sont polarisés parallèlement à l'axe a, par exemple, l'intensité lumineuse I traversant un polariseur de sortie sera $I = I_0 \sin^2 kV$ si la direction de polarisation de ce polariseur est parallèle à l'axe b, et $I = I_0 \cos^2 kV$ si cette direction est parallèle à l'axe a, $I_0$ étant égale à l'intensité lumineuse incidente s'il n'y a pas d'absorption parasite, V étant la différence de potentiel électrique entre les deux faces du cristal, et k un coefficient dépendant du matériau cristallin utilisé.

Pour obtenir une image, par projection à partir d'une lampe à travers cet ensemble, il suffit, selon ce qui a été dit précédemment, de faire régner un champ électrique parallèle à l'axe c, et de faire correspondre, en chaque point de la cible, la valeur de ce champ à la brillance du point correspondant de l'image à obtenir. Dans ce but, un faisceau électronique, issu d'un canon à électrons, et traversant des organes de déviation classiques, balaye la cible remplissant ainsi la fonction f2. Quant à la fonction f3, c'est-à-dire ici la commande du champ électrique, elle est également remplie par le faisceau de la manière suivante.

Lorsque les électrons de faisceau atteignent la surface de la cible, ils provoquent, si leur énergie est comprise dans les limites convenables et dans la mesure où le potentiel d'anode est suffisamment élevé, l'émission d'électrons secondaires en nombre plus grand que celui des électrons incidents. Il en résulte une élévation du potentiel électrique du point atteint, de sorte que la différence de potentiel entre l'anode et ce point diminue. Si les électrons du faisceau atteignent ce point en nombre suffisant, cette différence de potentiel devient négative et atteint une valeur telle (-3V par exemple), que chaque électron incident ne provoque plus l'émission que d'un seul électron secondaire. Le potentiel de ce point est ainsi fixé à une valeur limite par rapport à celui de l'anode. Il suffit pour cela que, compte tenu de la vitesse de balayage, l'intensité du faisceau soit suffisante. Le potentiel de l'anode étant constant, chaque passage du faisceau d'électrons fixe, comme il vient d'être dit, le potentiel d'un point quelconque A de la surface atteinte à une valeur $V_O$ indépendante de ce point et de l'instant de passage. Mais la charge électrique correspondante apparue en ce point dépend du potentiel de l'électrode de commande située à proximité, de l'autre côté de la cible.

Si l'on appelle VA le potentiel de cette électrode à l'instant de ce passage, cette charge est proportionnelle à $V_O - V_A$, VA représentant la valeur du signal d'information visuelle à l'instant de son passage.

La cible, dont la biréfringence dépend du champ électrique, est constituée par un monocristal de KDP, dont environ 95% de l'hydrogène a la forme d'hydrogène lourd (deutérium).

Or, l'effet Pockels est proportionnel, pour une épaisseur de cristal donnée, aux charges qui apparaissent sur les faces du cristal et donc, pour une tension de commande donnée, à la constante diélectrique de celui-ci. C'est pourquoi, on utilise une cible constituée en un cristal devenant ferroélectrique au-dessous d'une certaine température appelée température de Curie, et on opère avantageusement au voisinage de cette température, car la constante diélectrique atteint alors des valeurs très élevées et le relais optique peut fonctionner à l'aide de tensions de commande faciles à employer (l'effet Pockels étant proportionnel au produit $\varepsilon V$).

Les cristaux les plus courants qui présentent ce phénomène sont des sels acides, notamment du type KDP qui appartient à la classe des cristaux quadratiques et présente un axe optique parallèle à l'axe cristallographique c. Sa température de Curie est située vers -53°C. Au-dessus de la température de Curie, le DKDP est un cristal quadratique classe de symétrie $\overline{4}2$ m et il a un comportement paraélectrique. En dessous de la température de Curie, le DKDP devient orthorhombique, classe de symétrie mm2, et il manifeste un comportement ferroélectrique : localement il y a polarisation spontanée et apparition de domaines ferroélectriques.

A la température ambiante, le cristal est anisotrope, mais au voisinage du point de Curie l'anisotropie devient extrêmement importante. Le changement d'état s'accompagne de variations abruptes des propriétés physiques selon les axes du cristal :
- coefficients piézo-électriques
- coefficients électro-optiques
- constantes diélectriques $\varepsilon_x$ et $\varepsilon_z$.

Ainsi la constante diélectrique $\varepsilon_z$ passe d'une valeur d'environ 60 à la température ambiante à une valeur de 30.000 à la température de Curie.

On sait que, du point de vue électro-optique, l'épaisseur apparente e du cristal de DKDP est $e = 1(\varepsilon_x/\varepsilon'_z)^{0,5}$.

La cible apparait d'autant plus mince que le rapport $\varepsilon_x/\varepsilon'_z$ est plus petit, où $\varepsilon'_z$ est la valeur de $\varepsilon_z$ lorsque le cristal est bloqué mécaniquement. Dans un relais optique en effet, la lame monocristalline de DKDP, d'une épaisseur 1 voisine de 250 microns, est collée fermement sur un support rigide : une lame de fluorine de 5 mm d'épaisseur.

La cible du relais optique est donc habituellement refroidie vers -51°C, c'est-à-dire à une température légèrement supérieure au point de Curie. Dans ces conditions $\varepsilon_x/\varepsilon'_z \simeq 1/9$ et l'épaisseur apparente du cristal est environ 80 microns, ce qui confère au relais optique une bonne résolution d'image. En dessous du point de Curie, ce rapport $\varepsilon_x/\varepsilon'_z$ est encore bien plus faible, ce qui améliore beaucoup la résolution d'image.

Jusqu'à ce jour, il n'avait pas été possible d'utiliser pour une projection d'images télévisées, une cible refroidie en dessous de sa température de Curie. En effet, le changement d'état faisait apparaître systématiquement des domaines ferroélectriques qui se manifestent sur l'écran de projection par l'apparition d'un grand nombre de lignes brillantes verticales et horizontales disposées de façon désordonnée en travers de l'image. Ces domaines correspondent à des zones de réarrangement atomique différent.

Le but de l'invention est donc de permettre au relais optique de fonctionner juste en dessous de la température de Curie de la cible, avec une image finale ne présentant pas de détérioration dues à des lignes brillantes désordonnées.

Pour cela l'invention telle que définie dans le préambule est remarquable en ce que, pour maintenir la cible à la température nécessaire au fonctionnement, le relais optique est muni d'un échangeur thermique qui agit sur la cible de sorte qu'en fonctionnement normal la cible est formée :
- d'une zone centrale utile où elle présente une phase ferroélectrique, monodomaine,
- et une zone périphérique neutre, à température plus élevée que la température de Curie, où elle présente une phase paraélectrique.

Lorsque l'on compare le rapport $\varepsilon_x/\varepsilon'_z$ dans la phase paraélectrique et dans la phase ferroélectrique, on constate qu'il est possible d'améliorer la résolution intrinsèque de la cible en la faisant fonctionner dans l'état ferroélectrique.

La demanderesse a mis en évidence l'intérêt de fonctionner à une température inférieure au point de Curie, le rapport $\varepsilon_x/\varepsilon'_z$ devenant bien plus faible, car ceci améliore nettement la résolution d'image du relais optique. Typiquement à la fréquence spatiale de 1000 points par ligne et au courant de faisceau nominal de 60 µA, le contraste qui est de 11% à la température habituelle de fonctionnement (-51°C), atteint 24% lorsque la température de la cible est inférieure au point de Curie et cela sur une plage d'une dizaine de degrés environ (de -63°C à -53°C).

Selon le mode habituel de construction, la cible de KDP, de forme rectangulaire, est collée sur une lame de fluorine, qui est un bon conducteur thermique. Cette lame de fluorine est sertie dans une armature en cuivre ayant la forme d'un anneau, qui sert à transférer des frigories, elle-même montée sur des éléments réfrigérants à effet Peltier.

De cette manière, la cible se refroidit de façon centripète : les coins de la cible de KDP atteignent la température de Curie en premier, puis les côtés; un "cercle de froid" apparait qui délimite la frontière entre les deux états, paraélectrique au centre et ferroélectrique à la périphérie. Pendant le même temps, dans la zone périphérique devenue ferroélectrique, apparaissent les lignes de démarcations brillantes déjà signalées entre les multiples domaines ferroélectriques. Celles-ci prennent naissance aux microscopiques mais inévitables défauts des bordures de la cible de KDP.

L'invention consiste alors à faire progresser le froid à partir du centre de la cible et d'empêcher le cercle de froid d'atteindre les bords de la cible, afin que le cristal soit ferroélectrique au centre et paraélectrique à la périphérie. Le centre, qui est la zone utile pour la projection de l'image, est alors ferro- électrique et monodomaine. Cet état reste stable tant que la zone centrale ferroélectrique reste entourée d'une zone périphérique paraélectrique.

Selon un premier mode de réalisation pour obtenir le refroidissement de la cible par le centre, tout en sauvegardant les propriétés optiques du centre pour la projection de l'image, on creuse une gorge périphérique profonde dans la lame de fluorine de façon à allonger notablement le chemin thermique entre l'armature de cuivre et la périphérie de la cible de KDP.

Selon un second mode de réalisation le support de fluorine est constitué de deux pièces en fluorine taillées, polies dont l'une est munie d'un chanfrein et rapportées l'une sur l'autre par la partie centrale.

Selon un troisième mode de réalisation, le support en fluorine est taillé, poli, et muni d'un chanfrein afin de présenter une face plane de dimension inférieure au format de la cible de KDP, de telle sorte qu'après collage, la cible déborde de la zone de contact.

L'invention sera mieux comprise à l'aide des figures suivantes, données à titre d'exemples non limitatifs, qui représentent :

figure 1 : une coupe de la partie essentielle du relais optique selon l'art antérieur,

figure 2 : les courbes de variations avec la température des constantes diélectriques $\varepsilon_x$, $\varepsilon_z$, $\varepsilon'_z$,

figure 3 : une vue en coupe du montage de la cible sur les éléments réfrigérants,

figure 4 : une vue en coupe de la cible montée sur un échangeur thermique selon un premier mode de réalisation de l'invention,

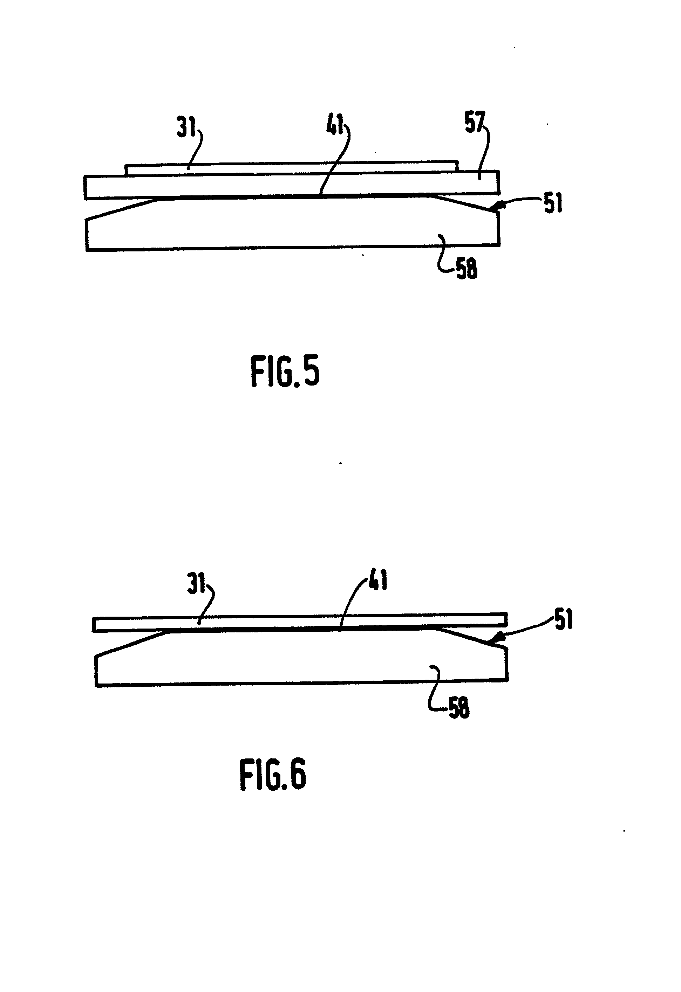

figure 5 : une vue en coupe de la cible montée sur un échangeur thermique selon un second mode de réalisation de l'invention,

figure 6 : une vue en coupe de la cible montée sur un échangeur thermique selon un troisième mode de réalisation de l'invention.

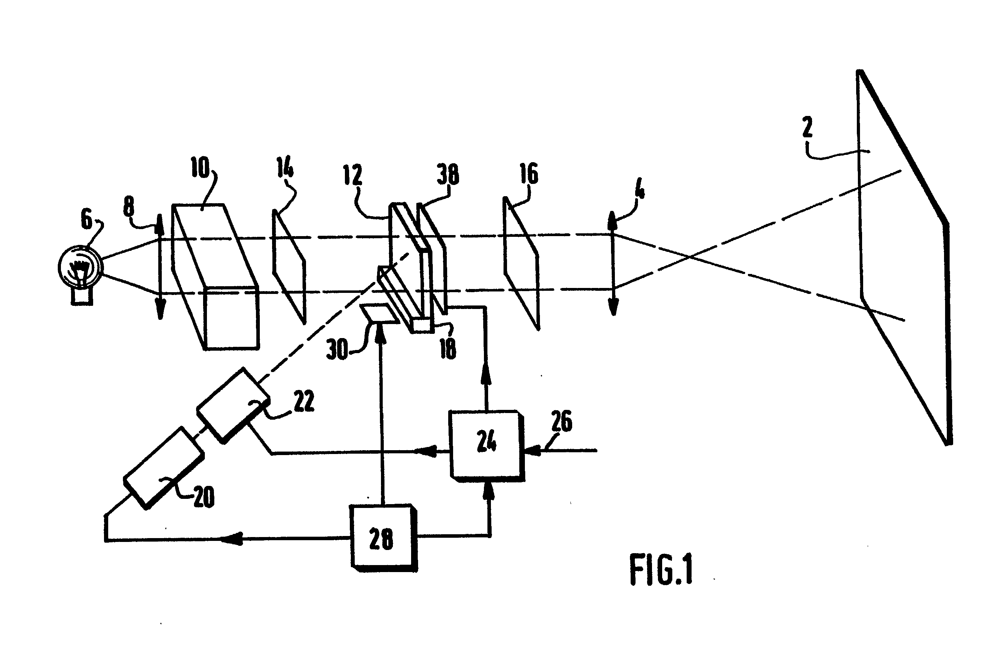

Sur la figure 1, sont schématiquement représentés, les organes essentiels d'un relais optique conforme à l'invention, et ceux qui coopèrent avec ce relais à l'obtention d'une image visible, projetée sur un écran 2 par une lentille de projection 4. La lumière est fournie par une lampe 6, représentée comme étant à incandescence, mais qui pourrait évidemment être de tout autre type. Cette lumière traverse une lentille de collimation 8, puis une cuve 10 dont le rôle est d'arrêter le rayonnement calorifique infrarouge. Le relais optique est essentiellement constitué par une cible 12, formée d'un monocristal parallélépipédique de KDP dont l'axe optique (c) est perpendiculaire aux grandes faces, et placée entre les deux polariseurs croisés 14 et 16 dont les plans de polarisation sont parallèles aux deux autres axes cristallographiques (a et b) du monocristal. Un échangeur thermique 18 est en contact avec la cible 12 et la maintient au voisinage de sa température de Curie. La face gauche de cette cible reçoit un faisceau d'électrons, représenté en pointillé et issu d'un canon à électrons 20. Ce faisceau balaye périodiquement toute la surface utile de la cible 12 sous l'action d'organes de déflexion 22 commandés par les signaux de balayage issus d'un récepteur 24 qui les élabore à partir des signaux de synchronisation qui lui sont fournis à son entrée 26 avec le signal d'information visuelle proprement dit. Un bloc 28 fournit à certains des organes déjà cités les tensions électriques continues qui leur sont nécessaires, ainsi qu'à une anode 30. Ce n'est que pour la clarté du dessin que celle-ci est représentée sous la forme d'une plaque parallèle au faisceau lumineux, car il est évident que cette disposition, très favorable au passage de la lumière ne l'est guère à la collection des électrons secondaires émis par tous les points de la surface de la cible 12 atteints par le faisceau électronique. C'est pourquoi, dans la pratique, l'anode est disposée parallèlement à la surface de la cible 12 et tout près de celle-ci. Comme elle doit être traversée par le faisceau d'électrons incidents et par la lumière, on lui donne une forme appropriée, celle d'une grille par exemple. Une lame 38 électriquement conductrice et optiquement transparente, à l'aide d'une mince couche d'or par exemple, est disposée derrière la cible 12. C'est à cette lame que le récepteur 24 applique le signal d'information visuelle.

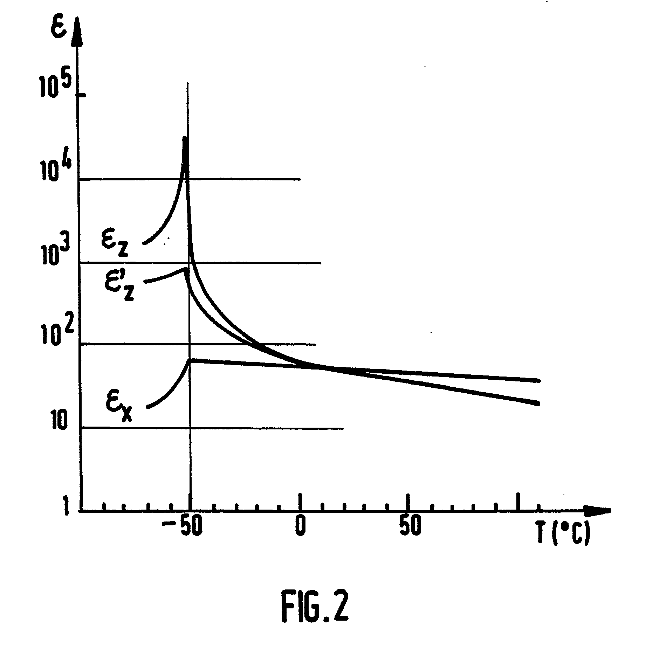

La figure 2 représente les variations avec la température de $\varepsilon_x$, $\varepsilon_z$, $\varepsilon'_z$. On constate que le passage de la phase ferroélectrique à la phase paraélectrique produit des variations brutales des caractéristiques de la cible et que l'échangeur thermique doit assurer une situation thermique très précise.

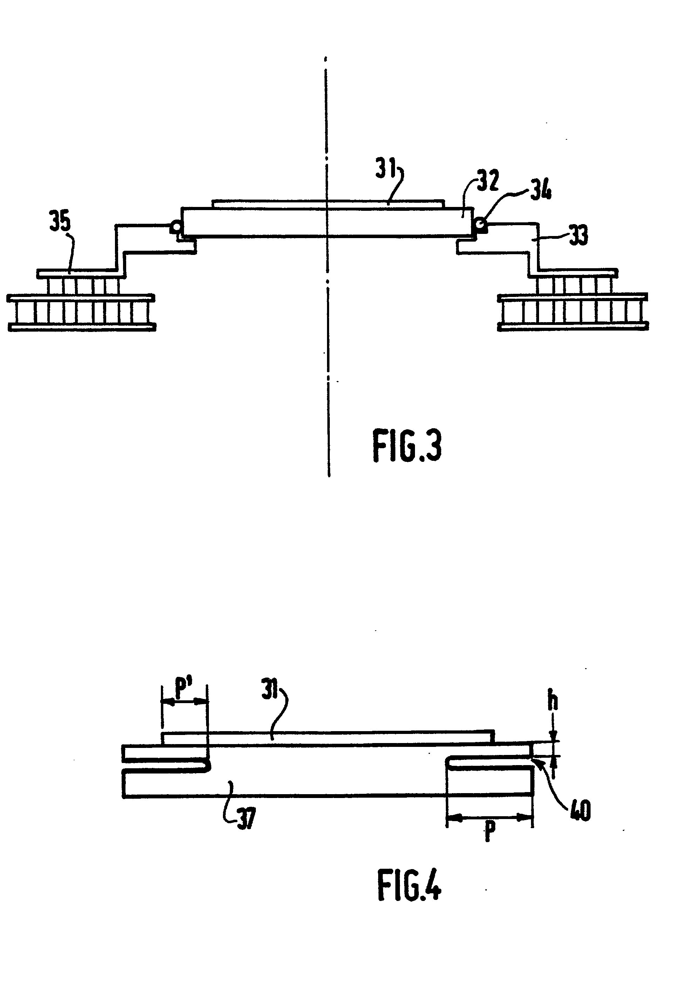

La figure 3 montre une vue en coupe du montage de la cible 31 sur les éléments refrigérants 35 selon l'art antérieur.

La cible 31 de KDP format 30x40 mm est collée sur une lame 32 en fluorine d'épaisseur 5 mm et de diamètre 50 mm. Cette lame en fluorine, qui est un bon conducteur thermique ($360.10^{-4}$ cal/cm/sec/degré), est sertie dans l'armature 33 en cuivre à l'aide d'un joint métalloplastique 34, par exemple un fil d'indium. Le refroidissement de la cible 31 à l'aide des éléments réfrigérants 35, s'effectue alors de manière centripète. La génération des domaines ferroélectriques s'opère alors à partir de la périphérie où de multiples domaines naissent sur des défauts microscopiques du cristal. Ces domaines progressent vers le centre puis fusionnent selon des domaines de plus grande étendue, mais toujours en nombre relativement élevé. Les frontières de ces limites de domaines se traduisent alors selon des lignes brillantes à structure désordonnée.

La figure 3 représente un échangeur thermique selon l'invention. Il est conçu pour faire progresser le froid à partir du centre de la cible. Lorsque la température descend en dessous de la température de Curie, un domaine ferroélectrique apparaît au voisinage du centre de la cible. La progression du froid se faisant du centre vers l'extérieur, ce domaine unique se développe vers la périphérie de la cible. Si ce domaine unique n'était pas arrêté dans sa progression vers la périphérie, il se morcelerait en un grand nombre de domaines plus petits lorsqu'il atteindrait la périphérie. Pour empêcher cette situation, la construction de l'échangeur thermique 37, compte tenu du flux de frigories qu'il reçoit, permet de maintenir une zone paraélectrique à la périphérie de lacible. Cette zone paraélectrique empêche au monodomaine central de se morceler. Pour cela l'échangeur thermique 37 sur lequel est placé la cible 31 est préférentiellement constitué d'une lame circulaire en fluorine dans laquelle est creusée périphériquement une gorge annulaire 40 de profondeur p. Cette gorge est faite à une distance $\underline{h}$ de la face de l'échangeur qui supporte la cible 31. Dans le plan de la gorge, et après le creusement de celle-ci, la lame de fluorine présente un diamètre $\underline{d}$. Celui-ci doit être inférieur à la plus faible $\underline{l}$ des dimensions (L,l) de la cible qui habituellement est rectangulaire, afin que la gorge pénètre en totalité sous la cible. La cible dépasse donc latéralement du diamètre $\underline{d}$ de p' tel que p'=l–d/2. Les distances p et p' doivent être plus élevées que la distance $\underline{h}$.

A titre d'exemple, une réalisation qui a donné satisfaction présente les caractéristiques suivantes :
- diamètre de la lame de fluorine 50 mm
- épaisseur de la lame de fluorine 5 mm
- profondeur de la gorge 10 mm
- largeur de la gorge 1 mm
- d = 30 mm
- h = 1 mm
- cible constituée d'un disque de diamètre 45 mm, d'où p' = 7,5 mm, et p = 10 mm soit p/h = 10, p'/h = 7,5.

Selon un second mode de réalisation le support de fluorine est constitué de deux lames 57 et 58 assemblées au moyen d'une colle 41. La première lame 57 est circulaire à faces parallèles. La seconde lame circulaire à faces parallèles, est munie d'un chanfrein 51 sur la face située du coté jouxtant la lame 57. Ce chanfrein 51 concourt au même but que la gorge circulaire du mode précédent. Il s'étend donc sous la cible de KDP.

Selon un troisième mode de réalisation le support de fluorine est constitué de la lame 58 seulement, telle qu'elle vient d'être décrite.

Dans les trois modes de réalisation qui viennent d'être décrits le collage soit de la cible sur le support, soit des lames 57 et 58 entre elles, est effectué à l'aide d'une colle 41 adhésive optique polymérisable sous ultraviolet.

Un relais optique selon l'invention trouve notamment son application dans la projection d'images, de type télévision, sur un écran de grandes dimensions.

## Revendications

1. Relais optique comportant une cible (12, 31) d'un matériau électriquement isolant et laissant passer la lumière d'une manière dépendant du champ électrique parallèle à la direction de propagation de cette lumière, des moyens (20) pour faire balayer une première face de cette cible par un faisceau électronique, une anode (30) apte à recueillir les électrons secondaires émis sous l'action de ce faisceau, une lame (38) optiquement transparente et électriquement conductrice disposée contre la deuxième face de la cible, cette lame recevant le signal électrique d'information visuelle et formant ainsi l'électrode de commande, la cible étant constituée en un matériau devenant ferroélectrique au-dessous d'une certaine température, dite température de Curie, au voisinage de laquelle fonctionne le relais optique, caractérisé en ce que, pour maintenir la cible à la température nécessaire au fonctionnement, le relais optique est muni d'un échangeur thermique, qui agit sur la cible, de sorte qu'en fonctionnement normal la cible est formée :
- d'une zone centrale utile où elle présente une phase ferroélectrique, monodomaine,
- et une zone périphérique neutre, à température plus élevée que la température de Curie, où elle présente une phase paraélectrique.

2. Relais optique selon la revendication 1, caractérisé en ce que l'échangeur thermique est constitué d'une lame de fluorine dont une première face supporte la cible, la lame de fluorine étant munie sur sa tranche, à une distance h de la première face, d'une gorge périphérique (40), dont le fond pénètre sous la cible d'une profondeur p', la lame de fluorine étant en contact avec une armature de transfert de frigories, selon la périphérie de sa seconde face et la partie adjacente de sa tranche.

3. Relais optique selon la revendication 2, caractérisé en ce que p' est supérieur à h.

4. Relais optique selon la revendication 1, caractérisé en ce que l'échangeur thermique est constitué d'une première lame (57) de fluorine dont une face supporte la cible, l'autre face étant collée à une seconde lame (58) de fluorine selon une face qui présente un chanfrein périphérique, la seconde lame de fluorine étant en contact avec une armature de transfert de frigories selon la périphérie de la face qui n'est pas collée à la première lame et la partie adjacente de la tranche.

5. Relais optique selon la revendication 1, caractérisé en ce que l'échangeur thermique est constitué d'une lame de fluorine (58) munie sur une face d'un chanfrein périphérique qui délimite une zone centrale de la face sur laquelle est collée la cible, qui déborde de toute cette zone centrale, la lame de fluorine étant en contact avec une armature de transfert de frigories selon la périphérie de la face qui ne supporte pas la cible et la partie adjacente de la tranche.

## Claims

1. An optical relay comprising a target (12, 31) of an electrically insulating material and transmitting light in dependence on the electric field parallel to the direction of propagation of said light, means (20) for scanning a first face of said target by means of an electron beam, an anode (30) suitable to collect the secondary electrons emitted by the action of said beam, an optically transparent and electrically conducting plate (38) arranged at the second face of the target, said plate receiving the electric visual information signal, thereby forming a control electrode, the target consisting of a material which becomes ferroelectric below a certain temperature, called the Curie temperature, in the proximity of which the optical relay operates, characterized in that in order to keep the target at the temperature necessary for its operation, the optical relay is provided with a heat exchanger which acts on the target such that in normal operation the target is formed of:
  – an effective central area where the target exhibits a single domain ferroelectric phase, and
  – a neutral circumferential area, at a higher temperature than the Curie temperature, where the target exhibits a paraelectric phase.

2. An optical relay as claimed in Claim 1, characterized in that the heat exchanger is formed of a fluorite plate, a first face of which supports the target, the fluorite plate being provided at its circumferential area, at a distance h of the first face, which a circumferential groove (40) which extends below the target over a distance p', the fluorite plate being in contact with a cold-transfer means along the circumference of the second face and the adjacent portion of its circumferential area.

3. An optical relay as claimed in Claim 2, characterized in that p' is larger than h.

4. An optical relay as claimed in Claim 1, characterized in that the heat exchanger is formed of a first fluorite plate (57), one face of which supports the target, the other face being bonded to a second fluorite plate (58) along a surface which has a circumferential bevelled edge, the second fluorite plate being in contact with a cold-transfer means along the periphery of the face which is not bonded to the first plate and the adjacent portion of the circumferential area.

5. An optical relay as claimed in Claim 1, characterized in that the heat exchanger is formed of a fluorite plate (58) which is provided on one face with a circumferential bevelled edge which marks off a central area of the face to which the target is bonded, which target projects from the total central area, the fluorite plate being in contact with a cold transfer means along the periphery of the face which does not support the target and the adjacent portion of the circumferential area.

**Patentansprüche**

1. Optisches Relais mit einem Target (12, 31) aus einem elektrisch isolierenden Werkstoff, das das Licht auf eine vom elektrischen Feld abhängige Weise durchläßt, wobei das Feld sich parallel zur Fortpflanzungsrichtung dieses Lichts erstreckt, mit Mitteln (20) zum Abtasten einer ersten Fläche dieses Targets durch ein elektronisches Bündel, mit einer geeigneten Anode (30) zum Einfangen der beim Abtasten durch das Bündel entstandenen Sekundärelektronen, mit einer optisch durchsichtigen und elektrisch leitenden Platte (38) an der zweiten Targetfläche, wobei diese Platte das elektrische Signal mit visueller Information empfängt und damit die Steuerelektrode bildet, das Target aus einem Werkstoff besteht, der bei einer bestimmten Temperatur mit der Bezeichnung Curie-Temperatur ferroelektrisch wird, in deren Nähe das optische Relais betrieben wird, dadurch gekennzeichnet, daß zum Festhalten der zum Targetbetrieb erforderlichen Temperatur das optische Relais einen Wärmeaustauscher besitzt, der derart auf das Target einwirkt, daß im Normalbetrieb das Target besteht aus
  – einer zentralen Nutzzone, in der es eine ferroelektrische Monodomänenphase besitzt,
  – und einer neutralen Umfangszone auf höherer Temperatur als die Curie-Temperatur, in der es eine parelektrische Phase besitzt.

2. Optisches Relais nach Anspruch 1, dadurch gekennzeichnet, daß der Wärmeaustauscher aus einer Flußspatplatte besteht, von der eine erste Fläche das Target trägt, und die Flußspatplatte in einem Abstand h von der ersten Fläche auf ihrem Rand eine Umfangsrille (40) enthält, deren Boden in bezug auf das Target in einer Tiefe p' liegt, wobei die Flußspatplatte am Umfang ihrer zweiten Fläche und beim Teil neben dem Rand mit einer Kälteübertragungsvorrichtung in Kontakt steht.

3. Optisches Relais nach Anspruch 2, dadurch gekennzeichnet, daß p' größer als h ist.

4. Optisches Relais nach Anspruch 1, dadurch gekennzeichnet, daß der Wärmeaustauscher aus einer Flußspatplatte (57) besteht, von der eine Fläche das Target trägt, und die andere Fläche mit einer zweiten Flußspatplatte auf einer Fläche befestigt ist, die eine schräge Kante aufweist, wobei die zweite Flußspatplatte am Umfang der nicht mit der ersten Platte befestigten Fläche und beim Teil neben dem Rand mit einer Kälteübertragungsvorrichtung in Kontakt steht.

5. Optisches Relais nach Anspruch 1, dadurch gekennzeichnet, daß der Wärmeaustauscher aus einer Flußspatplatte (58) besteht, die auf einer Fläche mit einer schrägen Kante versehen ist, die eine zentrale Zone der Fläche begrenzt, die mit dem Target befestigt ist, das über diese ganze zentrale Zone der Fläche begrenzt, die mit dem Target befestigt ist, das über diese ganze zentrale Zone ausragt, wobei die Flußspatplatte am Umfang der nicht das Target tragenden Fläche und beim Teil neben dem Rand mit einer Kälteübertragungsvorrichtung in Kontakt steht.

FIG.1

EP 0 217 455 B1

FIG.2

35  31  32  34

33

**FIG.3**

P'  31  h

37  P  40

**FIG.4**

FIG.5

FIG.6